# EUROPÄISCHE PATENTSCHRIFT

(11) **EP 4 479 294 B1**
(45) Veröffentlichungstag und Bekanntmachung des Hinweises auf die Patenterteilung: **22.10.2025**
(21) Anmeldenummer: 23705409.3
(22) Anmeldetag: 16.02.2023
(51) Int. Cl.: B62D 57/032, B25J 9/00, B25J 9/10

(54) **MOBILER ROBOTER**
MOBILE ROBOT
ROBOT MOBILE

(30) Priorität: 17.02.2022 LU 102911
(43) Veröffentlichungstag der Anmeldung: 25.12.2024
(73) Patentinhaber: HUBER, Georg, 1319 Luxembourg (LU)
(72) Erfinder: HUBER, Georg, 1319 Luxembourg (LU)
(74) Vertreter: Patentanwaltskanzlei Vièl & Wieske PartGmbB
(86) Internationale Anmeldenummer: PCT/EP2023/053955
(87) Internationale Veröffentlichungsnummer: WO 2023/156557

(56) Entgegenhaltungen:
- WO-A2-2008/084480
- CN-A- 108 749 951
- CN-A- 111 550 539
- JP-A- 2003 266 337
- JP-A- 2006 051 559
- JP-A- 2007 290 068
- US-A- 4 324 302

## Beschreibung

Die Erfindung betrifft einen mobilen Roboter mit einem Roboterkörper und mindestens einem Roboterbein, wobei das Roboterbein eine axial verschiebbare Stange umfaßt, die an dem Roboterkörper schwenkbar geführt ist, wobei Mittel zum axialen Verschieben der Stange und Mittel zum Verschwenken der Stange vorgesehen sind, wobei an der für das Roboterbein vorgesehenen Stelle des Roboterkörpers sich eine durchgängige Öffnung befindet, in der sich die Stange senkrecht und in variablen Winkeln relativ zur Öffnung bewegen lässt und das Roboterbein innerhalb des Roboterkörpers angeordnet ist, wobei die Stange sich durch die durchgängige Öffnung des Roboterkörpers hindurch erstreckt oder das Roboterbein an der Außenkante des Roboterkörpers axial verschiebbar angelenkt ist.

Neben Robotern mit Rädern und mit Raupenketten gibt es auch Roboter mit Beinen, die zur Fortbewegung, zur Höhenveränderung und zur Neigung des Roboterkörpers dienen.

Aus der WO 2020/169285 A1 ist ein Roboterbein mit mindestens zwei Gelenken bekannt, wobei jedes Gelenk zwei Segmente miteinander verbindet und jedes Gelenk eine Nocke aufweist, wobei das Roboterbein außerdem mindestens einen Aktuator und eine gemeinsame Sehne aufweist, die jede Nocke miteinander verbindet.

Die CN 111550539 A betrifft ein Antriebssystem eines bionischen Robotors. Das hydraulische Antriebssystem umfasst ein Gehäuse, einen Verstellmotor, eine hydraulische Antriebseinheit und einen Antriebsmechanismus, wobei der Verstellmotor oben in einem inneren Hohlraum des Gehäuses angeordnet ist, die hydraulische Antriebseinheit auf einer Seite des inneren Hohlraums des Gehäuses angeordnet ist und der Antriebsmechanismus in der Mitte des inneren Hohlraums des Gehäuses angeordnet ist. Dabei ist eine Drehscheibe am Boden des Verstellmotors angeordnet, und die Drehscheibe steht mit dem Verstellmotor über einen Synchronriemen und ein Synchronrad in Übertragungsverbindung.

Die US 4,324,302 A beschreibt eine Laufmaschine bestehend aus zwei Säulen, die normalerweise auf dem Boden ruhen und eine Last auf einer Plattform tragen, die sich exzentrisch zwischen den Säulen befindet. Ein Hubbein ist über Kugelgelenke mit einem Fuß und der Plattform verbunden und kann mit Hilfe von zwei doppelt wirkenden Hydraulikzylindern bewegt werden, um seine Neigung in zwei Ebenen zu verändern.

Die CN 108749951 A offenbart einen vierbeinigen mobilen Roboter, wobei die Roboterbeine schwenkbar an den Roboterkörper angebracht sind und jeweils eine axial verschiebbare Gewindestange aufweisen.

Die JP 2006 051559 A offenbart ein Roboterbein für einen mobilen Roboter, wobei das Roboterbein eine axial verschiebbare Zahnstange aufweist.

Derartige der Natur nachempfundene Roboterbeine weisen einen relativ komplexen Aufbau mit Gelenken auf und sind daher aufwendig in der Herstellung und reparaturanfällig; zudem beschränken sie die Höhe, in die sie den Roboterkörper anheben können, auf die Länge der Segmente bei ausgestreckten Gelenken.

Der vorliegenden Erfindung liegt die Aufgabe zugrunde, einen mobilen Roboter zu schaffen, der den durch den Roboterkörper erreichbaren Bereich im Vergleich zu den bekannten Robotern ausdehnt und einen möglichst einfachen Aufbau aufweist und dementsprechend robust ist.

Diese Aufgabe wird erfindungsgemäß bei einem mobilen Roboter gemäß dem Oberbegriff des Anspruchs 1 dadurch gelöst, daß die Stange vielfach länger als die Größe des Roboterkörpers ist und der Roboterkörper dabei entlang der vollen Länge der Stange verschoben werden kann, wobei die Stange eine erste Gewindestange mit Außengewinde und einer axial verlaufenden Nut ist, wobei das Außengewinde in ein Innengewinde eingreift, das dreh- und schwenkbar, aber nicht axial verschiebbar mit dem Roboterkörper verbunden ist und wobei ein Stift in der Nut zum Verhindern des radialen Drehens der Stange vorgesehen ist, daß als Mittel zum axialen Verschieben der Stange ein erster Antrieb zum Drehen des Innengewindes auf der Stange vorgesehen ist und daß als Mittel zum Verschwenken der Stange mindestens ein weiterer Antrieb vorgesehen ist, der direkt oder indirekt mit der ersten Gewindestange verbunden ist.

Durch axiales Verschieben der Gewindestange wird das Roboterbein in Aufwärts- bzw. in Abwärtsrichtung (z-Achse) bewegt. Durch den weiteren Antrieb wird die Gewindestange verschwenkt, was eine Bewegung des Roboterbeins in Rechts- bzw. Linksrichtung (x-Achse) oder Vorwärts- bzw. Rückwärtsbewegung (y-Achse) bewirkt.

Das erfindungsgemäße Roboterbein umfaßt eine Stange, auf die sich der Roboterkörper stützt, wobei das untere Ende der Stange am Boden aufsetzt. Die Stange ist entweder an der Außenkante des Roboterkörpers axial verschiebbar angelenkt oder an der für das Bein vorgesehenen Stelle des Roboterkörpers befindet sich eine Öffnung, in der sich die Stange senkrecht und in variablen Winkeln relativ zur Öffnung bewegen lässt. Die Vorrichtungen bewegen die Stange relativ zum Roboterkörper in Längsrichtung der Stange und sie ändern den Winkel der Stangenachse relativ zum Roboterkörper in zwei Dimensionen.

Die am Roboterkörper befestigten Vorrichtungen bewegen die Stange somit dreidimensional relativ zum Roboterkörper und ändern so - in der Regel im Zusammenwirken mit anderen Roboterbeinen - die horizontale und die vertikale Lage und die Neigung des Roboterkörpers relativ zum Boden. Die Stange kann vielfach länger sein als die Größe des Roboterkörpers. Ein derartiges Roboterbein weist einen einfachen Aufbau auf und ist daher günstig herzustellen und zu warten.

Die Aufgabe wird bei einem mobilen Roboter gemäß dem Oberbegriff des Anspruchs 2 dadurch gelöst, daß die Stange vielfach länger als die Größe des Roboterkörpers ist und der Roboterkörper dabei entlang der vollen Länge der Stange verschoben werden kann, wobei die Stange eine vorzugsweise rechteckige Zahnstange ist, daß als Mittel zum axialen Verschieben der Stange ein Antrieb mit einem in die Zahnstange eingreifenden komplementären Eingriffselement vorgesehen ist, und daß als Mittel zum Verschwenken der Stange mindestens ein weiterer Antrieb vorgesehen ist, der direkt oder indirekt mit der Zahnstange verbunden ist.

Eine vorteilhafte Weiterbildung der Erfindung besteht darin, daß als Mittel zum Verschwenken der Stange zwei Antriebe vorgesehen sind, die zueinander versetzt direkt oder indirekt mit der ersten Gewindestange verbunden sind.

Die beiden Antriebe können zueinander schräg oder rechtwinklig versetzt sein. Bei dieser Ausgestaltung kann sowohl eine Rechts- bzw. Linksbewegung (x-Achse) als auch eine Vorwärts- bzw. Rückwärtsbewegung (y-Achse) erfolgen. Die beiden Antreibe können als Servomotoren ausgestaltet sein.

Es ist auch möglich, statt der beiden Antriebe zum Verschwenken der Stange einen einzigen Antrieb vorzusehen, der über Umlenkmittel die Stange in zwei Achsen verschwenkt.

Es ist hierbei ausreichend, daß die Stange in Teilbereichen als Gewindestange ausgebildet ist.

Die Länge dieser Teilbereiche bestimmt die vertikale Verstellbarkeit des Roboterbeins.

Eine vorteilhafte Weiterbildung der Erfindung besteht darin, daß eine Steuerungsvorrichtung vorgesehen ist.

Damit der Roboter die Beinkonstruktion vielseitig ausnützen kann, müssen die Antriebe mit einem Signalgeber zur Umdrehungsanzeige ausgestattet sein oder für eine andere Anzeige, aus der die Steuerungsvorrichtung die Position des Beines ableiten kann. Nachdem die Steuerungsvorrichtung in einer Initialisierungsphase die Ausgangspositionen bestimmt hat, kann sie jeden Roboterfuß in jede Position innerhalb des erreichbaren Volumens bewegen; sie kann die Beine abhängig von der erforderlichen Standstabilität verschieden weit spreizen; sie kann die Beine um Hindernisse herum und über hohe Hindernisse hinwegbewegen; sie kann den Roboterkörper in jede Höhe zwischen dem Boden und der Länge der Gewindestange positionieren.

Eine vorteilhafte Ausgestaltung besteht darin, daß ein Neigungssensor vorgesehen ist.

Zur Steuerung ist ein Neigungssensor von Vorteil. Damit kann der Roboterkörper gezielt geneigt werden und insbesondere kann er unabhängig von der Geländebeschaffenheit immer waagrecht in einer frei veränderlichen Höhe gehalten werden.

Besonders vorteilhaft kann durch den Neigungssensor festgestellt werden, ob ein Roboterbein Bodenkontakt besitzt. Beispielsweise kann bei Verfahren eines Roboterbeins in Richtung des Bodens der Bodenkontakt anhand einer Änderung des Neigungswinkels bei Verfahren des Roboterbeins festgestellt werden.

Der Pfad, in dem sich der Roboter fortbewegt, kann sehr steil sein und braucht nicht von Hindernissen freigeräumt zu werden. So kann der Roboter beispielsweise in eine Hecke hinein und über sie hinwegzusteigen. Er kann in seichtem Wasser operieren und, wenn die Beine mit Plättchen versehen sind, auch auf schlammigem Boden. Der Roboter hinterlässt auf seinem Weg praktisch keine Spuren im Boden.

Der Roboter eignet sich insbesondere für den Einsatz in der Land- und Gartenwirtschaft, zum Beispiel in Weingärten, Teeplantagen, Reisfeldern. Dazu braucht er neben der Steuerungssoftware für die Fortbewegung eine Vorrichtung für die spezielle Anwendungstätigkeit, üblicherweise einen oder zwei Roboterarme einschließlich der dazugehörigen Steuerungsvorrichtung, außerdem eine Kamera und Programme zur Mustererkennung, beispielsweise zur Identifizierung von bestimmten Pflanzen oder Schädlingen, schließlich ein Programm zur Orientierung und Navigation im Gelände. Wenn mehrere Roboter gleichzeitig arbeiten, müssen ihre Bewegungen relativ zueinander und ihre Arbeit koordiniert werden.

Nachfolgend wird eine Ausgestaltung der Erfindung anhand von Zeichnungen näher erläutert.

Es zeigen
- Fig. 1: eine Seitenansicht des Ausschnittes eines erfindungsgemäßen mobilen Roboters, der für ein Roboterbein relevant ist,
- Fig. 2: eine Draufsicht von der Unterseite auf den mobilen Roboter gemäß Fig. 1
- Fig 3: eine Seitenansicht eines weiteren erfindungsgemäßen mobilen Roboters,
- Fig. 4: eine Seitenansicht eines weiteren mobilen Roboters,
- Fig. 5: ein Querschnitt des mobilen Roboters gemäß Fig. 4.

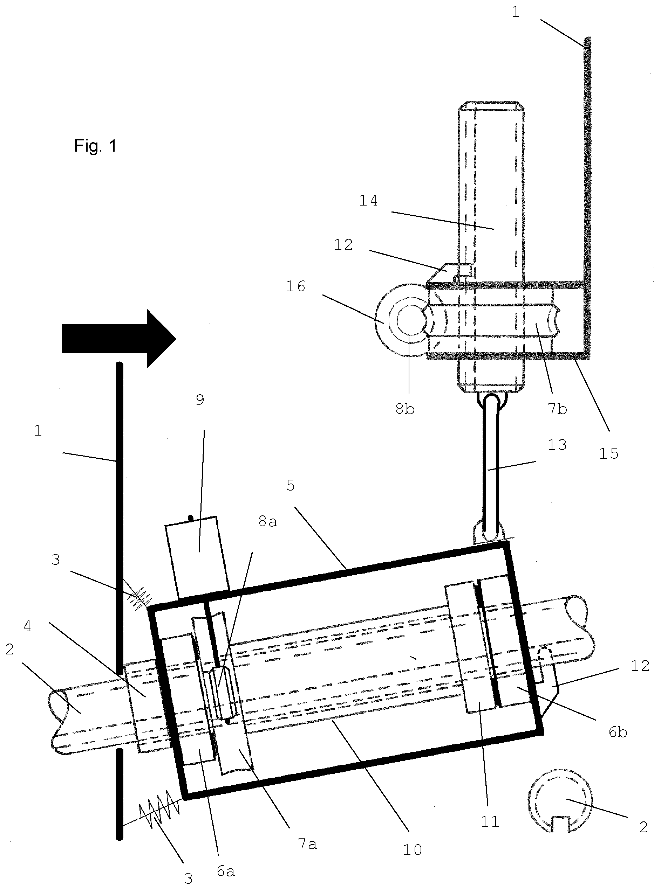

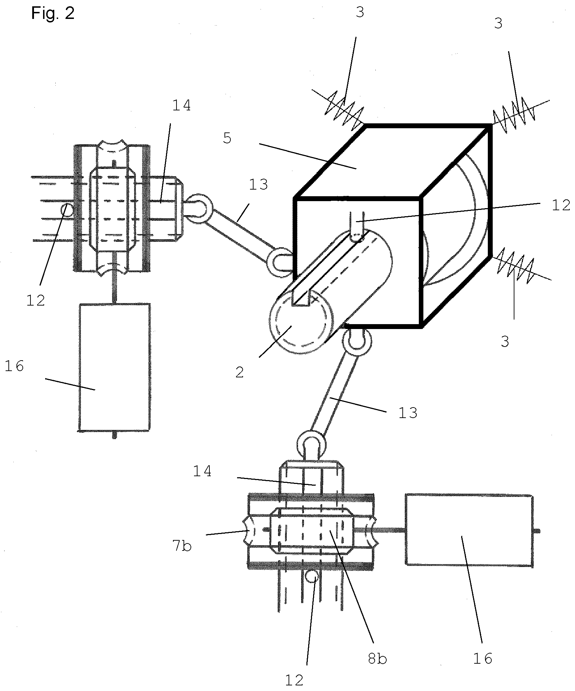

Die Figuren 1 und 2 zeigen ein Ausführungsbeispiel des mobilen Roboters mit Roboterbein.

In Fig. 1 weist ein Pfeil von oben nach unten und gibt somit die Blickrichtung für Fig. 1 vor.

Für die Auf- und Abwärtsbewegung wird bei dem Ausführungsbeispiel eine lange Gewindestange 2 mit Außengewinde und axial verlaufenden Nut verwendet. Die Gewindestange 2 läuft durch eine an den Kanten abgerundete Öffnung des Roboterkörpers 1, die minimal größer ist als der Querschnitt der Gewindestange 2. Darunter hängt ein rechteckiger Rahmen 5, durch den die Gewindestange 2 axial verschoben wird. Im Innern des Rahmens 5 ist auf der oberen, der Öffnung zugewandten Seite ein für Druck ausgelegtes erstes Kugellager 6a auf die Gewindestange 2 aufgeschoben. Das erste Kugellager 6a liegt auf einer ersten Mutter 7a auf, deren Außenseite mit Schneckenrad-Zähnen versehen ist. Eine lange Hülse 10 verbindet diese erste Mutter 7a fest mit einer weiteren Mutter 11, die ihrerseits auf einem für Axialdruck ausgelegten zweiten Kugellager 6b liegt. Der drehbare Ring dieses zweiten Kugellagers 6b liegt auf dem Rahmen 5 auf. Die beiden Muttern 7a, 11 und die sie verbindende Hülse 10 lassen sich im Rahmen 5 frei drehen.

Seitlich am Rahmen 5 ist als erster Antrieb ein Motor 9 mit Schneckenwelle 8a befestigt. Die Schneckenwelle greift in das Schneckenrad der ersten Mutter 7a ein, dreht es, dreht damit die beiden Muttern 7a und 11 und verschiebt so die Gewindestange 2 innerhalb des Rahmens 5. Ein am Rahmen 5 befestigter erster Stift 12 greift in die Nut des Gewindestange 2 ein, damit sie sich nicht axial mitdreht.

Der Roboterkörper 1 liegt über eine kurze Abstandshülse 4 auf dem Rahmen 5 auf. Zugfedern 3 an den oberen Ecken des Rahmens 5 halten die Gewindestange 2 zentriert in der Öffnung des Roboterkörpers 1 und erlauben gleichzeitig Winkelbewegungen der Gewindestange 2.

Für die Rechts-/Linksbewegung wird nur die Unterseite des Rahmens 5 bewegt, die der Öffnung im Roboterkörper 1 gegenüberliegt. Ein Gestänge 13 verbindet eine untere Kante des Rahmens 5 durch Gelenke mit der Stirnseite einer zweiten, kurzen Gewindestange 14, die mit einer Nut versehen ist.

Auf diese kurze Gewindestange 14 ist eine zweite Mutter 7b gedreht, die auf ihrer Außenseite Schneckenzähne hat. Am Roboterkörper ist als weiterer Antrieb ein Motor 16 befestigt, der die zweite Mutter 7b mittels einer Schneckenwelle 8b dreht. Eine ebenfalls am Roboterkörper 1 befestigte U-förmige Halterung 15 beiderseits der zweiten Mutter 7b verhindert, dass sich die zweite Mutter 7b axial verschiebt, und ein zweiter Stift 12, der in die Nut der kurzen Gewindestange 14 greift, hindert sie am axialen Drehen. Kugellager zwischen der Halterung und der zweiten Mutter 7b verringern die Reibung an der Halterung 15. Die sich drehende zweite Mutter 7b verschiebt die kurze Gewindestange 14 innerhalb der U-förmigen Halterung 15 und verändert so mittels des Gestänges und Rahmens 5 den Rechts-/Links-Winkel der langen Gewindestange 2 des Roboterbeins.

An der unteren Kante des Rahmens 5 im rechten Winkel zum Gestänge für die Rechts-/Links-Verschiebung ist ein weiteres, identisch gebautes Gestänge befestigt mit kurzer Gewindestange und einer von einem Schneckengetriebe gedrehten Mutter in einer U-förmigen Halterung. Sie schieben das Roboterbein in Vorwärts-/Rückwärtsrichtung.

Alternativ können für die Rechts/Links-Verschiebung und Vorwärts-/Rückwärts-Verschiebung jede Art von Linearantrieb verwendet werden.

Statt des Schneckengetriebes für die Auf-/Abwärtsbewegung kann die Mutter auf ihrer Außenseite statt des Schneckenrads alternativ ein Zahnrad aufweisen, das durch ein Ritzel auf der Motorachse getrieben wird, die dann parallel zur Gewindestange verläuft.

Abhängig von der Geschwindigkeit des Motors kann ein Untersetzungsgetriebe erforderlich sein.

Zur Erhöhung der Bewegungsgeschwindigkeit kann alternativ zu einer Gewindestange eine rechteckige Zahnstange verwendet werden. Sie macht die Nut zur Verhinderung der axialen Drehung überflüssig und sie erhöht die Bewegungsgeschwindigkeit, erfordert andererseits zur Feinsteuerung einen Motor mit Untersetzungsgetriebe oder einen Schrittmotor anstelle der Mutter, des Schneckenantriebs und des einfachen Motors.

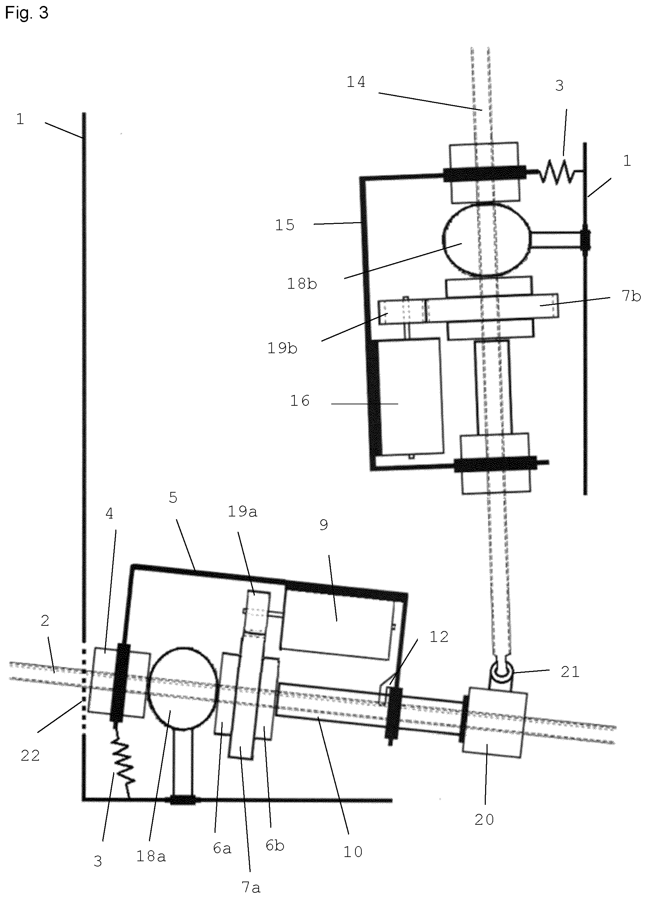

In Figur 3 ist ein weiteres Ausführungsbeispiel des mobilen Roboters mit Roboterbein dargestellt.

Für die Auf- und Abwärtsbewegung wird bei dem Ausführungsbeispiel eine lange Gewindestange 2 mit Außengewinde und axial verlaufenden Nut 17 verwendet. Die Gewindestange 2 läuft durch eine an den Kanten abgerundete Öffnung 22 des Roboterkörpers 1, die minimal größer ist als der Querschnitt der Gewindestange 2. Die Öffnung 22 des Roboterkörpers 1 kann durchgängig sein. Dabei kann sich die Gewindestange 2 durch die durchgängige Öffnung 22 des Roboterkörpers 1 erstrecken. Unter der Öffnung 22 befindet sich ein U-förmiger Rahmen 5, durch den die Gewindestange 2 axial verschoben wird.

Im Innern des Rahmens 5 ist auf der oberen, der Öffnung 22 zugewandten Seite eine Abstandshülse 4 auf die Gewindestange aufgeschoben. Die Abstandshülse 4 ist fest mit der dem Rahmen 5 verbunden und bildet ein Gleitlager für die axiale Bewegung der Gewindestange 2. Die Gewindestange 2 verläuft durch eine Öffnung eines ersten Kugelgelenks 18a. Durch das erste Kugelgelenk 18a wird das Roboterbein am Roboterkörper 1 befestigt. Das erste Kugelgelenk 18a erlaubt Winkelbewegungen der Gewindestange 2 zusammen mit dem Rahmen 5.

An dem ersten Kugelgelenk 18a liegt ein für Druck ausgelegtes erstes Kugellager 6a an. Das erste Kugellager 6a ist auf die Gewindestange 2 aufgeschoben. Das erste Kugellager 6a liegt auf einer ersten Mutter 7a auf, deren Außenseite als Stirnzahnrad ausgebildet ist. Diese erste Mutter 7a liegt auf einem für Axialdruck ausgelegten zweiten Kugellager 6b auf. Die drehbaren Ringe der beiden Kugellager 6a und 6b liegen auf der Mutter 7a auf. Die Mutter 7a lässt sich im Rahmen 5 frei drehen. An dem Kugellager 6b liegt eine lange Hülse 10 an. Die lange Hülse 10 verläuft durch den Rahmen 5 und ist mit diesem verbunden. Die beiden mit dem Rahmen verbundenen Hülsen 4 und 10 verhindern eine axiale Bewegung der ersten Mutter 7a entlang der Gewindestange 2 und relativ zum Rahmen 5.

Seitlich am Rahmen 5 ist als erster Antrieb ein Motor 9 mit einem ersten Ritzel 19a befestigt. Das erste Ritzel 19a greift in das Zahnrad der ersten Mutter 7a ein, dreht es, dreht damit die Mutter 7a und verschiebt so die Gewindestange 2 innerhalb des Rahmens 5. Ein am Rahmen 5 befestigter Stift 12 greift in die Nut der Gewindestange 2 ein, damit sie sich nicht axial mitdreht.

Zugfedern 3 an den oberen Ecken des Rahmens 5 verhindern ein Verdrehen des Rahmens 5 radial um die Gewindestange 2 und erlauben Winkelbewegungen des Rahmens 5 und damit der Gewindestange 2 um das Kugelgelenk 18.

Für die Rechts-/Linksbewegung wird nur die Unterseite des Rahmens 5 bewegt, die der Öffnung 22 im Roboterkörper 1 gegenüberliegt. Ein Gleitlager 20 ist mittels der langen Hülse 10 mit dem Rahmen 5 verbunden. An der Außenseite des Gleitlagers 20 sind zwei Kardangelenke 21 im Winkel von 90° befestigt. Das Kardangelenk 21 ist einerseits mit dem Gleitlager 20 und andererseits mit einer kurzen Gewindestange 14 verbunden. Das Kardangelenk 21 erlaubt veränderliche Winkelpositionen der kurzen Gewindestange 14 mit der Gewindestange 2. Das Kardangelenk 21 blockiert dabei axiale Drehungen der kurzen Gewindestange 14.

Auf diese kurze Gewindestange 14 ist eine zweite Mutter 7b gedreht, deren Außenseite als Stirnzahnrad ausgebildet ist. Am Roboterkörper 1 ist als weiterer Antrieb ein Motor 16 befestigt, der die zweite Mutter 7b mittels eines zweiten Ritzels 19b dreht. Eine über ein zweites Kugelgelenk 18b ebenfalls am Roboterkörper 1 befestigte U-förmige Halterung 15 beiderseits der zweiten Mutter 7b verhindert, dass sich die zweite Mutter 7b axial verschiebt. Die kurze Gewindestange 14 weist dabei keine Nut auf, da das Kardangelenk 21 ein axiales Drehen der kurzen Gewindestange 14 verhindert. Die sich drehende zweite Mutter 7b verschiebt die kurze Gewindestange 14 innerhalb der U-förmigen Halterung 15 und verändert so mittels des Kardangelenks 21, des Gleitlagers 20 und Rahmens 5 den Rechts-/Links-Winkel der langen Gewindestange 2 des Roboterbeins.

An der unteren Kante des Rahmens 5 im rechten Winkel zum Gestänge für die Rechts-/LinksVerschiebung ist ein weiteres, identisch gebautes Gestänge befestigt mit kurzer Gewindestange und einer vom Ritzel gedrehten Mutter in einer U-förmigen Halterung. Sie schieben das Roboterbein in Vorwärts-/Rückwärtsrichtung.

Alternativ können für die Rechts/Links-Verschiebung und die Vorwärts-/RückwärtsVerschiebung jede Art von Linearantrieb verwendet werden.

Abhängig von der Geschwindigkeit des Motors kann ein Untersetzungsgetriebe erforderlich sein.

Zur Erhöhung der Bewegungsgeschwindigkeit kann alternativ zu einer Gewindestange eine rechteckige Zahnstange verwendet werden. Sie macht die Nut zur Verhinderung der axialen Drehung überflüssig und sie erhöht die Bewegungsgeschwindigkeit, erfordert andererseits zur Feinsteuerung einen Motor mit Untersetzungsgetriebe oder einen Schrittmotor anstelle der Mutter, des Zahnrads und des einfachen Motors.

Das Roboterbein kann innerhalb des Roboterkörpers angeordnet sein. Dabei kann sich die Gewindestange 2 durch eine durchgängig Öffnung 22 des Roboterkörpers hindurch erstrecken.

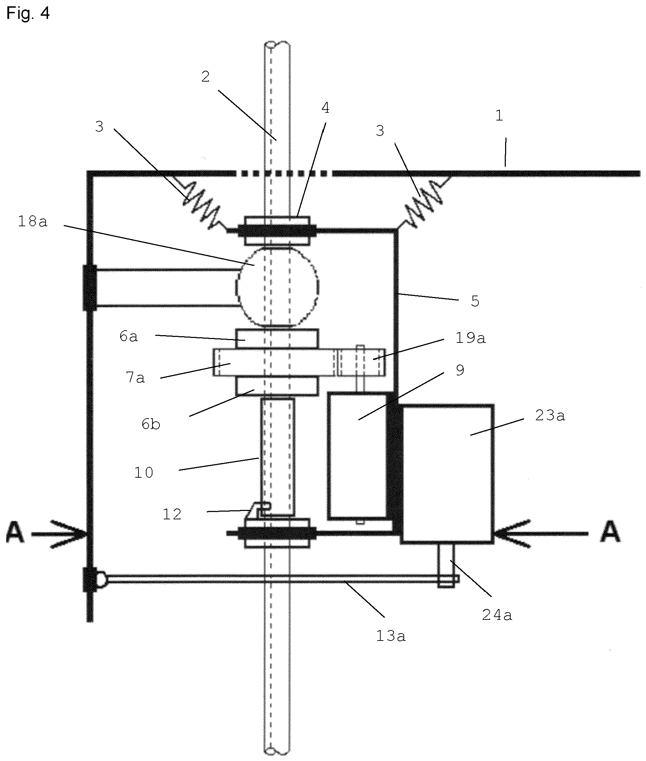

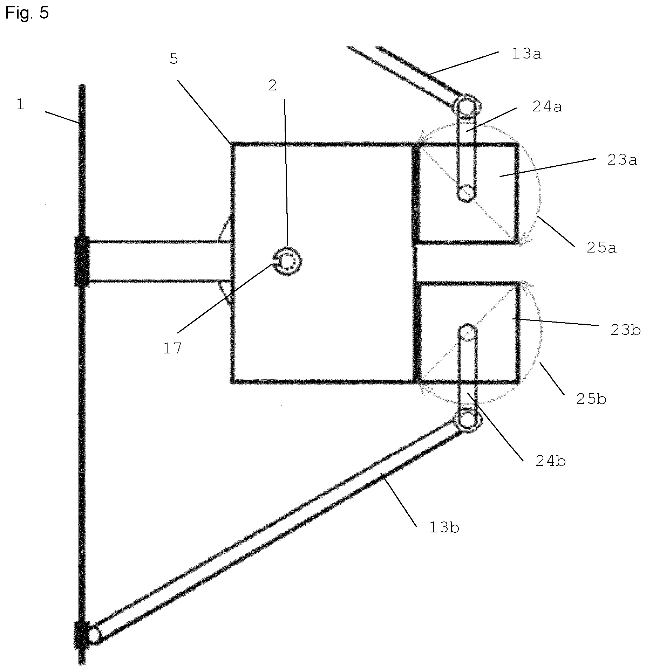

In Figur 4 ist ein weiteres Ausführungsbeispiel des mobilen Roboters mit Roboterbein dargestellt. Figur 5 zeigt einen Querschnitt durch den mobilen Roboter gemäß Figur 4 entlang des Schnitts A-A.

Für die Auf- und Abwärtsbewegung wird bei dem Ausführungsbeispiel eine lange Gewindestange 2 mit Außengewinde und axial verlaufenden Nut 17 verwendet. Die Gewindestange 2 läuft durch eine an den Kanten abgerundete Öffnung 22 des Roboterkörpers 1, die minimal größer ist als der Querschnitt der Gewindestange 2. Die Öffnung 22 des Roboterkörpers 1 kann durchgängig sein. Dabei kann sich die Gewindestange 2 durch die durchgängige Öffnung 22 des Roboterkörpers 1 erstrecken. Vorteilhaft kann der mobile Roboter auf diese Weise besonders kompakt gestaltet werden. Unter der Öffnung 22 befindet sich ein U-förmiger Rahmen 5, durch den die Gewindestange 2 axial verschoben wird.

Im Innern des Rahmens 5 ist auf der oberen, der Öffnung 22 zugewandten Seite eine Abstandshülse 4 auf die Gewindestange aufgeschoben. Die Abstandshülse 4 ist fest mit der dem Rahmen 5 verbunden und bildet ein Gleitlager für die axiale Bewegung der Gewindestange 2. Die Gewindestange 2 verläuft durch eine Öffnung eines ersten Kugelgelenks 18a. Durch das erste Kugelgelenk 18a wird das Roboterbein am Roboterkörper 1 befestigt. Das erste Kugelgelenk 18a erlaubt Winkelbewegungen der Gewindestange 2 zusammen mit dem Rahmen 5.

An dem ersten Kugelgelenk 18a liegt ein für Druck ausgelegtes erstes Kugellager 6a an. Das erste Kugellager 6a ist auf die Gewindestange 2 aufgeschoben. Das erste Kugellager 6a liegt auf einer ersten Mutter 7a auf, deren Außenseite als Stirnzahnrad ausgebildet ist. Diese erste Mutter 7a liegt auf einem für Axialdruck ausgelegten zweiten Kugellager 6b auf. Die drehbaren Ringe der beiden Kugellager 6a und 6b liegen auf der Mutter 7a auf. Die Mutter 7a lässt sich im Rahmen 5 frei drehen. An dem Kugellager 6b liegt eine lange Hülse 10 an. Die lange Hülse 10 verläuft durch den Rahmen 5 und ist mit diesem verbunden. Die beiden mit dem Rahmen verbundenen Hülsen 4 und 10 verhindern eine axiale Bewegung der ersten Mutter 7a entlang der Gewindestange 2 und relativ zum Rahmen 5.

Seitlich am Rahmen 5 ist als erster Antrieb ein Motor 9 mit einem ersten Ritzel 19a befestigt. Das erste Ritzel 19a greift in das Zahnrad der ersten Mutter 7a ein, dreht es, dreht damit die Mutter 7a und verschiebt so die Gewindestange 2 innerhalb des Rahmens 5. Ein am Rahmen 5 befestigter erster Stift 12 greift in die Nut des Gewindestange 2 ein, damit sie sich nicht axial mitdreht.

Zugfedern 3 an den oberen Ecken des Rahmens 5 verhindern ein Verdrehen des Rahmens 5 radial um die Gewindestange 2 und erlauben Winkelbewegungen des Rahmens 5 und damit der Gewindestange 2 um das Kugelgelenk 18.

Für die Rechts-/Linksbewegung sind an der Unterseite des Rahmens 5 zwei Servomotoren 23a und 23b verbunden- An jedem der beiden Servomotoren 23a und 23b ist jeweils ein Arm 24a und 24b angeordnet, der sich mit dem jeweiligen Servomotor 23a und 23b innerhalb des Winkelbereichs 25a und 25b drehen lässt. An den Armen 24a und 24b ist jeweils ein Gestänge 13a und 13b beweglich verbunden. Die Gestänge 13a und 13b sind an dem Roboterkörper 1 befestigt. Eine Auslenkung des Arms 24a oder 24b vom Roboterkörper 1 weg zieht den Servomotor 23a oder 23b zum Roboterkörper 1 hin, sodass der Rahmen 5 sich um das erste Kugelgelenk 18a dreht und die Gewindestange 2 auswinkelt. Die Gestänge 13a und 13b sind ungefähr im rechten Winkel gegeneinander angeordnet, somit können die beiden Servomotoren 23a und 23b die Gewindestange 2 in die beiden horizontalen Dimensionen bewegen.

Das Roboterbein kann innerhalb des Roboterkörpers angeordnet sein. Dabei kann sich die Gewindestange 2 durch eine durchgängig Öffnung 22 des Roboterkörpers hindurch erstrecken.

### Bezugszeichenliste

1 Roboterkörper
2 Stange
3 Zugfeder
4 Abstandshülse
5 Rahmen
6a erstes Kugellager
6b zweites Kugellager
7a erste Mutter
7b zweite Mutter
8a Schneckenwelle
8b Schneckenwelle
9 Motor
10 Hülse
11 Mutter
12 Stift
13 Gestänge
13a erstes Gestänge
13b zweites Gestänge
14 kurze Gewindestange
15 Halterung
16 Antrieb
17 Axial verlaufende Nut
18a erstes Kugelgelenk
18b zweites Kugelgelenk
19a erstes Ritzel
19b zweites Ritzel
20 Gleitlager
21 Kardangelenk
22 Öffnung
23a erster Servomotor
23b zweiter Servomotor
24a erster Arm
24b zweiter Arm
25a erster Winkelbereich
25b zweiter Winkelbereich

## Patentansprüche

1. Mobiler Roboter mit einem Roboterkörper (1) und mindestens einem Roboterbein, wobei das Roboterbein eine axial verschiebbare Stange (2) umfaßt, die an dem Roboterkörper (1) schwenkbar geführt ist, wobei Mittel (6, 7a, 8a, 9, 10, 11) zum axialen Verschieben der Stange (2) und Mittel (7b, 8b, 14, 15, 16) zum Verschwenken der Stange (2) vorgesehen sind, wobei an der für das Roboterbein vorgesehenen Stelle des Roboterkörpers (1) sich eine durchgängige Öffnung (22) befindet, in der sich die Stange (2) senkrecht und in variablen Winkeln relativ zur Öffnung bewegen lässt und das Roboterbein innerhalb des Roboterkörpers angeordnet ist, wobei die Stange sich durch die durchgängige Öffnung (22) des Roboterkörpers (1) hindurch erstreckt oder das Roboterbein an der Außenkante des Roboterkörpers (2) axial verschiebbar angelenkt ist, wobei die Stange (2) vielfach länger als die Größe des Roboterkörpers (1) ist und der Roboterkörper (1) dabei entlang der vollen Länge der Stange (2) verschoben werden kann, wobei die Stange (2) eine erste Gewindestange mit Außengewinde und einer axial verlaufenden Nut ist, wobei das Außengewinde in ein Innengewinde eingreift, das dreh- und schwenkbar, aber nicht axial verschiebbar mit dem Roboterkörper (1) verbunden ist und wobei ein Stift (12) in der Nut zum Verhindern des radialen Drehens der Stange (2) vorgesehen ist, wobei als Mittel (6, 7a, 8a, 9, 10, 11) zum axialen Verschieben der Stange (2) ein erster Antrieb (9) zum Drehen des Innengewindes auf der Stange (2) vorgesehen ist und wobei als Mittel (7b, 8b, 14, 15, 16) zum Verschwenken der Stange mindestens ein weiterer Antrieb (16) vorgesehen ist, der direkt oder indirekt mit der ersten Gewindestange verbunden ist.

2. Mobiler Roboter mit einem Roboterkörper (1) und mindestens einem Roboterbein, wobei das Roboterbein eine axial verschiebbare Stange (2) umfaßt, die an dem Roboterkörper (1) schwenkbar geführt ist, wobei Mittel (6, 7a, 8a, 9, 10, 11) zum axialen Verschieben der Stange (2) und Mittel (7b, 8b, 14, 15, 16) zum Verschwenken der Stange (2) vorgesehen sind, wobei an der für das Roboterbein vorgesehenen Stelle des Roboterkörpers (1) sich eine durchgängige Öffnung (22) befindet, in der sich die Stange (2) senkrecht und in variablen Winkeln relativ zur Öffnung bewegen lässt und das Roboterbein innerhalb des Roboterkörpers angeordnet ist, wobei die Stange sich durch die durchgängige Öffnung (22) des Roboterkörpers (1) hindurch erstreckt oder das Roboterbein an der Außenkante des Roboterkörpers (2) axial verschiebbar angelenkt ist, wobei die Stange (2) vielfach länger als die Größe des Roboterkörpers (1) ist und der Roboterkörper (1) dabei entlang der vollen Länge der Stange (2) verschoben werden kann, wobei die Stange (2) eine vorzugsweise rechteckige Zahnstange ist, wobei als Mittel zum axialen Verschieben der Stange (2) ein Antrieb mit einem in die Zahnstange eingreifenden komplementären Eingriffselement vorgesehen ist, und wobei als Mittel zum Verschwenken der Stange mindestens ein weiterer Antrieb vorgesehen ist, der direkt oder indirekt mit der Zahnstange verbunden ist.

3. Mobiler Roboter gemäß Anspruch 1 oder Anspruch 2, **dadurch gekennzeichnet, daß** als Mittel zum Verschwenken der Stange (2) zwei Antriebe (16) vorgesehen sind, die zueinander versetzt direkt oder indirekt mit der ersten Gewindestange verbunden sind.

4. Mobiler Roboter gemäß einem der Ansprüche 1 bis 3, **dadurch gekennzeichnet, daß** die Stange (2) in Teilbereichen als Gewindestange ausgebildet ist.

5. Mobiler Roboter gemäß einem der Ansprüche 1 bis 4, **dadurch gekennzeichnet, daß** eine Steuerungsvorrichtung vorgesehen ist.

6. Mobiler Roboter gemäß einem der Ansprüche 1 bis 5, **dadurch gekennzeichnet, daß** ein Neigungssensor vorgesehen ist.

## Claims

1. A mobile robot comprising a robot body (1) and at least one robotic leg, wherein the robotic leg comprises an axially movable rod (2), which is pivotally guided on the robot body (1), wherein means (6, 7a, 8a, 9, 10, 11) for axially moving the rod (2) and means (7b, 8b, 14, 15, 16) for pivoting the rod (2) are provided, wherein a continuous opening (22), in which the rod (2) can move perpendicularly and at variable angles relative to the opening, is located at the point on the robot body (1) provided for the robotic leg, and the robotic leg is arranged within the robot body, wherein the rod extends through the continuous opening (22) in the robot body (1), or the robotic leg is axially movably articulated to the outer edge of the robot body (2), wherein the rod (2) is multiple times longer than the size of the robot body (1) and the robot body (1) can be moved along the full length of the rod (2) in this case, wherein the rod (2) is a first threaded rod comprising an outer thread and an axially extending groove, wherein the outer thread engages in an inner thread, which is connected to the robot body (1) so as to be rotatable and pivotable, but not axially movable, and wherein a pin (12) is provided in the groove to prevent the rod (2) from rotating radially, wherein a first drive (9) for rotating the inner thread on the rod (2) is provided as means (6, 7a, 8a, 9, 10, 11) for axially moving the rod (2) and wherein at least one further drive (16), which is directly or indirectly connected to the first threaded rod, is provided as means (7b, 8b, 14, 15, 16) for pivoting the rod.

2. A mobile robot comprising a robot body (1) and at least one robotic leg, wherein the robotic leg comprises an axially movable rod (2), which is pivotally guided on the robot body (1), wherein means (6, 7a, 8a, 9, 10, 11) for axially moving the rod (2) and means (7b, 8b, 14, 15, 16) for pivoting the rod (2) are provided, wherein a continuous opening (22), in which the rod (2) can move perpendicularly and at variable angles relative to the opening, is located at the point on the robot body (1) provided for the robotic leg, and the robotic leg is arranged within the robot body, wherein the rod extends through the continuous opening (22) in the robot body (1), or the robotic leg is axially movably articulated to the outer edge of the robot body (2), wherein the rod (2) is multiple times longer than the size of the robot body (1) and the robot body (1) can be moved along the full length of the rod (2) in this case, wherein the rod (2) is a preferably rectangular rack, wherein a drive comprising a complementary engagement element that engages in the rack is provided as means for axially moving the rod (2), and wherein at least one further drive, which is directly or indirectly connected to the rack, is provided as means for pivoting the rod.

3. The mobile robot according to claim 1 or claim 2, **characterized in that** two drives (16), which are directly or indirectly connected to the first threaded rod so as to be offset from one another, are provided as means for pivoting the rod (2).

4. The mobile robot according to one of the claims 1 to 3, **characterized in that** the rod (2) is configured as a threaded rod in portions.

5. The mobile robot according one of the claims 1 to 4, **characterized in that** a control device is provided.

6. The mobile robot according one of the claims 1 to 5, **characterized in that** an inclination sensor is provided.

## Revendications

1. Robot mobile avec un corps de robot (1) et au moins une jambe de robot, la jambe de robot comprenant une tige (2) axialement déplaçable, guidée de manière pivotante sur le corps de robot (1), des moyens (6, 7a, 8a, 9, 10, 11) étant prévus pour le déplacement axial de la tige (2), et des moyens (7b, 8b, 14, 15, 16) étant prévus pour le pivotement de la tige (2), une ouverture traversante (22) étant prévue à l'emplacement destiné à la jambe de robot sur le corps de robot (1) et dans laquelle la tige (2) peut être déplacée perpendiculairement et sous des angles variables par rapport à l'ouverture, et la jambe de robot étant disposée à l'intérieur du corps de robot, la tige s'étendant à travers l'ouverture traversante (22) du corps de robot (1) ou la jambe de robot étant articulée au bord extérieur du corps de robot (2) de manière axialement déplaçable, la longueur de la tige (2) étant un multiple de la taille du corps de robot (1) et le corps de robot (1) pouvant être déplacé le long de toute la longueur de la tige (2), la tige (2) étant une première tige filetée avec un filetage extérieur et une rainure s'étendant axialement, le filetage extérieur s'engageant dans un filetage intérieur qui est relié au corps de robot (1) de manière rotative et pivotante, mais non axialement déplaçable, et une broche (12) étant prévue dans la rainure pour empêcher la rotation radiale de la tige (2), un premier entraînement (9) pour faire tourner le filetage intérieur sur la tige (2) étant prévu comme moyens (6, 7a, 8a, 9, 10, 11) pour le déplacement axial de la tige (2), et au moins un autre entraînement (16), relié directement ou indirectement à la première tige filetée, étant prévu comme moyens (7b, 8b, 14, 15, 16) pour le pivotement de la tige.

2. Robot mobile avec un corps de robot (1) et au moins une jambe de robot, la jambe de robot comprenant une tige (2) axialement déplaçable, guidée de manière pivotante sur le corps de robot (1), des moyens (6, 7a, 8a, 9, 10, 11) étant prévus pour le déplacement axial de la tige (2), et des moyens (7b, 8b, 14, 15, 16) étant prévus pour le pivotement de la tige (2), une ouverture traversante (22) étant prévue à l'emplacement destiné à la jambe de robot sur le corps de robot (1) et dans laquelle la tige (2) peut être déplacée perpendiculairement et sous des angles variables par rapport à l'ouverture, et la jambe de robot étant disposée à l'intérieur du corps de robot, la tige s'étendant à travers l'ouverture traversante (22) du corps de robot (1) ou la jambe de robot étant articulée au bord extérieur du corps de robot (2) de manière axialement déplaçable, la longueur de la tige (2) étant un multiple de la taille du corps de robot (1) et le corps de robot (1) pouvant être déplacé le long de toute la longueur de la tige (2), la tige (2) étant une crémaillère de préférence rectangulaire, un entraînement avec un élément d'engrènement complémentaire qui s'engage dans la crémaillère étant prévu comme moyens pour le déplacement axial de la tige (2), et au moins un autre entraînement relié directement ou indirectement à la crémaillère étant prévu comme moyens pour le pivotement de la tige.

3. Robot mobile selon la revendication 1 ou la revendication 2, **caractérisé en ce que** deux entraînements (16) sont prévus comme moyens pour le pivotement de la tige (2), lesquels entraînements sont reliés directement ou indirectement à la première tige filetée en étant décalés l'un par rapport à l'autre.

4. Robot mobile selon l'une des revendications 1 à 3, **caractérisé en ce que** la tige (2) est réalisée par section sous la forme d'une tige filetée.

5. Robot mobile selon l'une des revendications 1 à 4, **caractérisé en ce qu'**un dispositif de commande est prévu.

6. Robot mobile selon l'une des revendications 1 à 5, **caractérisé en ce qu'**un capteur d'inclinaison est prévu.
